# EUROPEAN PATENT APPLICATION

(11) **EP 1 710 976 A1**
(43) Date of publication of application: **11.10.2006**
(21) Application number: 06112047.3
(22) Date of filing: 30.03.2006
(51) Int. Cl.: H04L 29/06, H04L 12/26

(54) **Method of monitoring progress of a signalling message and network monitoring apparatus**

(30) Priority: 04.04.2005 GB 0506777
(71) Applicant: Agilent Technologies, Palo Alto, CA 94303-0870 (US)
(72) Inventor: Garcia, Francisco Javier, South Queensferry, Lothian EH30 9TG (GB); Gardner, Robert, South Queensferry, Lothian EH30 9TG (GB)
(74) Representative: Coker, David Graeme

(57) **Abstract**

In the field of Session Initiation Protocol (SIP) transactions, it is desirable to obtain diagnostic information concerning SIP transactions, for example, times of transmission or receipt of SIP messages. However, messages forming parts of transactions can be routed via a number of different paths through a series of servers in a communications network and it is desirable to obtain measurement data from one or more or the servers. Consequently, the present invention provides a method of monitoring progress of a signalling message over a message sequence path that analyses Via object data (1010) stored in SIP messages (1002) to determine a path taken by a given message and obtaining measurement data from at least one server (1000) in the path identified.

## Description

The present invention relates to a method of monitoring progress of a signalling message of the type, for example, that follows a message sequence path for a Session Initiation Protocol (SIP) signalling transaction, such as a SIP signalling transaction relating to a Voice over Internet Protocol (VolP) call. The present invention also relates to a network monitoring apparatus.

Voice over IP is a growing Internet Protocol (IP) technology that uses packets of data to communicate voice calls between two or more terminals equipped to handle VoIP calls. Traditionally, packet switched communications have been used to communicate data between terminals, for example web pages. The popularity of VoIP is increasing due to recent technical advances in relation to the production of VolP chipsets that are suitable for mobile computing devices, such as Personal Digital Assistants (PDAs) and other mobile terminals. With the onset and growth in mobile and wireless Local Area Network (LAN) markets, it is predicted that VolP will become the dominant integrating and convergent application of choice for telephony.

However, one factor that will contribute to the success of VoIP telephony is Quality of Service (QoS). Consequently, Service Assurance products targeting VoIP have been developed and presently adopt either one of two technologies to address operational performance characteristics of supporting infrastructure of VolP calls and voice quality.

One Service Assurance technology is known as Active Measurement Technology, and involves the generation, transmission and capture of well-formed synthetic traffic within a packet-switched network that supports VoIP calls to address a particular performance metric of interest in relation to a service. However, the measurements relate to the synthetic traffic and not real user traffic, and so do not reflect the experience of the real user traffic.

An alternative technology is known as Passive Measurement Technology, and uses a tap to couple a probe to a link between SIP components in order to observe real user traffic on the link without disruption to the service. However, the passive techniques rely on filtering, sampling and data reduction relating to observed real user traffic on the link with other annotations such as data capture timestamps. These techniques require probing of multiple links simultaneously, which complicates the deployment of such service assurance technologies and increases the associated cost. Furthermore, in large operator networks, deployment of such technology has proven non-scalable and, in some core networks, is known to make excessive demands upon available processing power with respect to monitoring of all connections to be monitored. An additional disadvantage is the processing complexity associated with making two point measurements, for example one-way delay measurements.

According to a first aspect of the present invention, there is provided a method of monitoring progress of a signalling message over a message sequence path for a SIP signalling transaction, the method comprising the steps of: providing a data store comprising path trail data accessible by reference to message type, session and destination information related thereto; obtaining data from the path trail data, the data relating to a version of the signalling message as received at a called host node and identifying a path followed by the signalling message; obtaining measurement data associated with the signalling message from a first intermediary node identified by the data identifying the path followed by the signalling message.

The method may further comprise the step of: obtaining measurement data associated with the message from a second intermediary node identified by the data identifying the path followed by the signalling message.

The session may be identified by data identifying a calling host node, data identifying the called host node, and data identifying a group of signalling messages comprising the signalling message.

The called host node may constitute a destination for the version of the signalling message as received by the called host node, the step of obtaining the data identifying the path followed by the signalling message further comprising: using data identifying the destination for the version of the signalling message as received by the called host node to identify partially the path followed by the signalling message.

The signalling message may have a session associated therewith, and the step of obtaining the data identifying the path followed by the signalling message may further comprise: using data identifying the session associated with the signalling message to identify partially the path followed by the signalling message.

According to a second aspect of the present invention, there is provided a method of tracing back a signalling message comprising the method of monitoring progress of a signalling message over a message sequence path for a SIP signalling transaction as set forth in relation to the first aspect of the invention.

According to a third aspect of the present invention, there is provided a network monitoring apparatus, the apparatus comprising: a data store for storing path trail data accessible by reference to message type, session and destination information related thereto; a processing resource arranged to obtain, when in use, data from the path trail data, the data relating to a version of the signalling message as received at a called host node and identifying a path followed by the signalling message; wherein the processing resource is further arranged to obtain, when in use, measurement data associated with the signalling message from a first intermediary node identified by the data identifying the path followed by the signalling message. The network monitoring apparatus may support an Operations Support Systems (OSS) application.

According to a fourth aspect of the present invention, there is provided a method of sharing measurement data between a first node and a second node, the measurement data having been acquired by the first node and relating to an event associated with a SIP signalling transaction in a communications network, the method comprising the steps of: selecting a signalling packet to be sent from the first node to the second node as part of a process related to a SIP transaction, the signalling packet having a data structure definition associated therewith; incorporating the measurement data in the signalling packet in accordance with the data structure definition prior to sending the signalling packet to the second node.

The method may further comprise the steps of: receiving the signalling packet at the second node; and obtaining the measurement data from the signalling packet.

The SIP transaction may be supported by a Mobile IPv6 protocol.

The data structure definition may be an extendible schema.

The first node may be any one of a host node, a proxy node, or a redirect node.

According to a fifth aspect of the present invention, there is provided a method of measuring network performance in relation to a plurality of nodes in a communications network, the plurality of nodes comprising a first pair of communication nodes, the first pair of communication nodes participating in a signalling transaction for a SIP communication, the method comprising the step of: sharing measurement data between the first pair of communication nodes according to the method of sharing measurement data between the first node and the second node as set forth above in relation to the third aspect of the invention, the first pair of communication nodes corresponding the first node and the second node.

The plurality of nodes may comprise a second pair of communication nodes, the second pair of communication nodes participating in the signalling transaction for the SIP communication, the method further comprising the step of: sharing measurement data between the second pair of communication nodes according to the method of sharing measurement data between the first node and the second node as set forth above in relation to the third aspect of the invention, the second pair of communication nodes corresponding to the first node and the second node.

One of the first pair of communication nodes may be common to the first and second pairs of communication nodes.

The method may further comprise the step of: communicating the measurement data to a remote monitoring application.

According to a sixth aspect of the present invention, there is provided a network node apparatus for participating in a SIP signalling transaction in a communications network, the apparatus comprising: a data store; a processing resource arranged to provide: a measurement recorder for recording measurement data relating to an event associated with the SIP transaction in the data store; a packet selector for identifying a signalling packet forming part of a process related to the SIP transaction and to be sent, when in use, to another node participating in the SIP transaction, the signalling packet having a data structure definition capable of supporting incorporation of additional information in the signalling packet; a message modifier for incorporating the measurement data in the signalling packet in accordance with the data structure definition of the signalling packet; and a packet forwarder for forwarding the signalling packet to the another node.

According to a seventh aspect of the present invention, there is provided a network node apparatus for participating in a SIP signalling transaction in a communications network, the apparatus comprising: a data store; a processing resource arranged to provide: a message receiver for receiving a signalling packet forming part of a process related to the SIP transaction and incorporation of measurement data therein by virtue of a data structure definition of the signalling packet, the measurement data relating to an event associated with the SIP transaction; a measurement extractor for extracting the measurement data from the signalling packet; and a data recorder for recording the measurement data in the data store.

According to a eighth aspect of the present invention, there is provided a system for sharing measurement data between a first node and a second node, the measurement data having been acquired, when in use, at the first node and relating to an event associated with a SIP signalling transaction in a communications network, the system comprising: a packet selector for selecting a signalling packet to be sent from the first node to the second node as part of a process related to the SIP transaction, the signalling packet having a data structure definition associated therewith; and a packet modifier for incorporating the measurement data in the signalling packet in accordance with the data structure definition prior to sending the signalling packet to the second node.

According to an ninth aspect of the present invention, there is provided a system for measuring network performance in relation to a plurality of nodes in a communications network, the plurality of nodes comprising a first pair of communication nodes, the first pair of communication nodes participating, when in use, in a signalling transaction for a SIP communication, the system comprising: the system for sharing measurement data between the first node and the second node as set forth above in relation to the seventh aspect of the invention, the first pair of communication nodes corresponding the first node and the second node.

It is thus possible to provide a method of sharing measurement data, a system for sharing measurement data and a node apparatus that obviates the need to perform subsequent correlation of events or messages, due to retention of related data together as part of a measurement process and "piggybacking" of information to and from collaborating measurement points. Since measurement data is added to existing packets, a low bandwidth overhead is incurred, compared to the active and passive measurement approaches described above that require fully fledged transport packets of their own. Further, the exploitation of real user signalling traffic for piggybacking measurements and triggers results in measurements that truly reflect the experience of real user traffic. Additionally, data collection from the collaborating measurement points is an external issue, for which all measurement approaches exploit existing techniques for data collection, for example, Management Information Bases (MIBs) and a Simple Network Management Protocol (SNMP), streaming of results at periodic intervals, request/response services, or publish/subscribe services. Further, the present measurement technique is end-to-end in nature and, as such, only requires end systems to be instrumented for the provision of sufficient data to enable certain calculations to be performed, thereby reducing cost, complexity and a requirement for specialised probes to perform the same functionality. Additionally, data can be shared, progress monitored and/or measurements made in relation to messages, transactions and/or dialogues. It is also possible to perform some baseline measurements without the need for synchronised clocks, relative time being employed instead through use of local clocks of instrumented nodes. Hence, it is thus possible to provide simpler, more scalable and more cost effective VolP Service Assurance tools than known tools.

At least one embodiment of the invention will now be described, by way of example only, with reference to the accompanying drawings, in which:
**Figure 1** is a schematic diagram of network nodes for supporting SIP communications in relation to a call between a first host terminal and a second host terminal;
**Figure 2** is a schematic diagram of a protocol stack for use with the network nodes of Figure 1;
**Figure 3** is a message sequence chart of signalling messages communicated between the first host terminal and a SIP Registrar server of Figure 1, and including timing measurements made that constitute an embodiment of the invention;
**Figure 4** is a table, shown in part, of calculation results obtained from measurement data recorded in relation to the message sequence chart of Figure 3;
**Figure 5** is a graph of the calculation results based upon the table of Figure 4;
**Figure 6** is a message sequence chart of a VolP message SIP dialogue for setting up a VoIP call;
**Figure 7** is a table, shown in part, of sample calculation results obtained from measurement data recorded in relation to the VolP dialogue of Figure 6;
**Figure 8** is a graph of a first number of the calculation results based upon the table of Figure 7;
**Figure 9** is a graph of a second number of the calculation results based upon the table of Figure 7; and
**Figure 10** is a schematic diagram of messages communicated between proxy servers and data obtained therefrom for use in relation to another embodiment of the invention.

Throughout the following description identical reference numerals will be used to identify like parts.

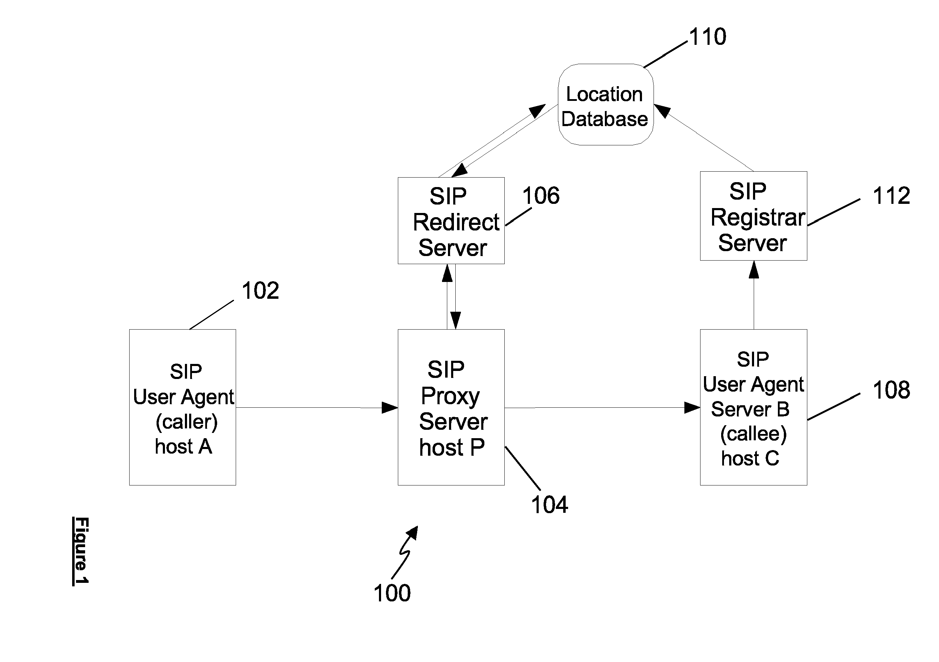

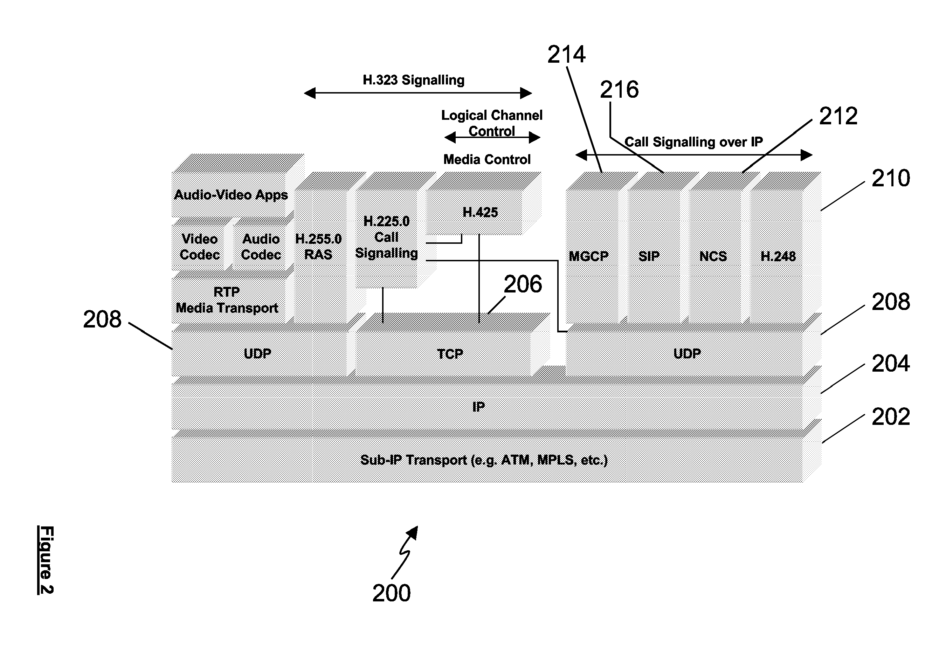

Referring to Figures 1 and 2, a communications network 100 supports a protocol stack 200 (Figure 2) to provide Voice over Internet Protocol (VoIP) communications. The protocol stack 200 has sub-IP layers 202. Since these sub-IP layers 202 are not directly relevant to the operation of the communications network 100 in relation to VoIP communications, they will not be described further herein in order to preserve clarity and conciseness of description.

An IP layer 204 overlies the sub-IP layers 202. A transport layer then overlies the IP layer 204, for example a Transmission Control Protocol (TCP) layer 206 and/or a User Datagram Protocol (UDP) layer 208. In relation to the UDP layer 208, an H.248 layer 210, a Network-based Call Signalling (NCS) layer 212, a Media Gateway Control Protocol (MGCP) layer 214 and a Session Initiation Protocol (SIP) layer 216 overlie the UDP layer 208.

Referring back to Figure 1, to support the above-described protocol stack 200, the communications network 100 comprises a first host terminal 102. The first host terminal 102 supports a first user agent application that constitutes an end-point of communications for a SIP session. In this example, the SIP session relates to a VoIP communication. The first user agent can be used to make an invitation to a multimedia session, or accept or decline an invitation to join a multimedia session, as well as starting or terminating a call and managing existing calls. The first host terminal 102 is capable of communicating with a proxy server 104.

The proxy server 104 constitutes an intermediate component for relaying signalling messages between user agent applications to allow the user agent applications to establish a communications path therebetween. The proxy server 104 acts as both a client for a called server or user agent, and as a server for a calling user agent or forwarding server. It should be noted that, although a single proxy server is described in this example, the communications network 100 can comprise a series of such proxy servers between the first host terminal 102 and a second host terminal 104.

The proxy server 104 is capable of communicating with a redirect server 106 and a second host terminal 108, the second host terminal 108 supporting a second user agent application. At this point, it should be pointed out that a user agent that initiates a call is known as a "caller", whereas a user agent that responds or answers a call is known as a "callee". Typically, the user agents perform both caller and callee roles, examples of such user agents being either software or hardware SIP telephones that can, in this example, serve as the first and/or second host terminal 102, 108. Like the first user agent, the second user agent can be used to make an invitation to a multimedia session, or accept or decline an invitation to join a multimedia session, as well as starting or terminating a call and managing existing calls.

The redirect server 106 serves, inter alia, as an automated telephone enquiry operator that accepts SIP invitation requests to callees and maps addresses of the callees to a respective set of zero or more actual locations for each callee. Location information accessed by the redirect server 106 is stored in a location database 110, a registrar server 112 also being able to access the location database 110 for the purpose of updating the location database 110.

The registrar server 112 is responsible for accepting registration transactions from user agents, and in this respect the second host terminal 108 is capable of communicating with the registrar server 112. The registrar server 112 is assisted by other non-SIP specific architecture components not described herein, for example a Lightweight Directory Access Protocol (LDAP) directory server, in order to maintain up-to-date information on every registered user agent in the location database 110. The location database 110 maintains information regarding availability, location details and contact information of user agents.

The first host terminal 102, the proxy server 104, the redirect server 106, the registrar server 112 and the second host terminal 108 (hereinafter also referred to as "components"), are instrumented with so-called application agnostic logic, or dynamically loadable code, that is application aware or understands SIP signalling processes (hereinafter referred to as SIP-agnostic-logic (SIP-AL) modules) in order to implement measurement and/or measurement data sharing functionality. Further, different SIP-AL modules exist depending upon the type of messages, transactions or dialogues to be observed when assisting with a specific SIP telemetry task.

As described in Internet Engineering Task Force (IETF) Request For Comments (RFC) 3261 (http://www.faqs.org/rfcs/rfc3261.html), two types of generic SIP transactions are defined: an INVITE transaction and a non-INVITE transaction. Additionally, associated state machines are defined for the INVITE and non-INVITE transactions. The INVITE transaction state machine implements logic to instantiate an INVITE request "progression" message, which for example provides feedback to a user at the end of a line as to the progression of a call, and a final ACK message request, thereby implementing a three-way handshake. The non-INVITE transaction state machine, similarly, implements logic to support transactions that do not use ACK message requests.

Depending upon their functionality, the SIP-AL modules mentioned above implement fully or partially the two state machines defined by RFC 3261, but for the purpose of pattern matching so as to recognise relevant SIP signalling messages so as to effect measurements and record states pertaining to the SIP signalling messages relevant to a transaction of interest. The skilled person will now appreciate that partial implementation of the two state machines is possible, because the SIP-AL modules do not serve to assist in call set-up, but rather they are used to trace pertinent states of interest in a call set-up phase for the purpose of monitoring or diagnostic activities. Consequently, there are states in actual transaction state machines that are not relevant to the diagnostic tasks to be performed. In this and other embodiments, the SIP-AL modules can be simplified so as to reduce the amount of SIP signalling messages that have to be tracked by any one given SIP-AL module, thereby allowing a plurality of simplified SIP-AL modules to be deployed in respective network elements associated with receipt and/or transmission of a subset of SIP communications. Consequently, the processing requirements at the respective network elements can be reduced by confinement of the processing capabilities of the SIP-AL modules. For example, a discrete set of SIP-AL modules can be defined and implemented to monitor specific SIP transactions as follows:
- SIP-AL Register: for tracking signalling message patterns related to client registrations with a SIP registrar and location service;
- SIP-AL Invite: for tracking patterns related to SIP call set-up INVITE requests;
- SIP-AL Cancel: for tracking patterns related to cancelling an invitation to a SIP session;
- SIP-AL Info: for tracking patterns related to the transportation of further information mid-way through a SIP session;
- SIP-AL Bye: for tracking SIP session termination patterns;
- SIP-AL Options: for tracking queries used to gather capability information from a callee;

At each component, a data store, for example an active cache (not shown in Figure 1), of records pertaining to SIP transactions is maintained. The records are uniquely identified and keyed by exploiting SIP call-IDs, alphanumeric globally unique identifiers, such as 2345678@lancs.ac.uk. The SIP call-IDs can be stored as 32-bit hashes of such keys, thereby guaranteeing uniqueness within each active cache. Each active cache is managed by so-called soft-state principles, in that the records of each active cache are given lifetimes after which the records expire, resulting in the records contained therein being deleted automatically. However, this lifetime association can be used to track and monitor incomplete transactions, resulting in, prior to deletion, appropriate summaries of such incomplete transactions being generated and obtained by, for example sent to, an Operations Support Systems (OSS) application for further root cause analysis.

In operation, registration delay is a fundamental latency that needs to be monitored in respect of VolP communications supported by the communications network 100. In this respect, as more users switch to using VolP services and these users become mobile, the burden on SIP registrars, for example the registrar server 112, needs to be carefully monitored, since any faults can lead to large communication delays. When users are not appropriately registered in a VolP architecture, their whereabouts remain undetermined and hence interested parties or correspondents are not able to contact them.

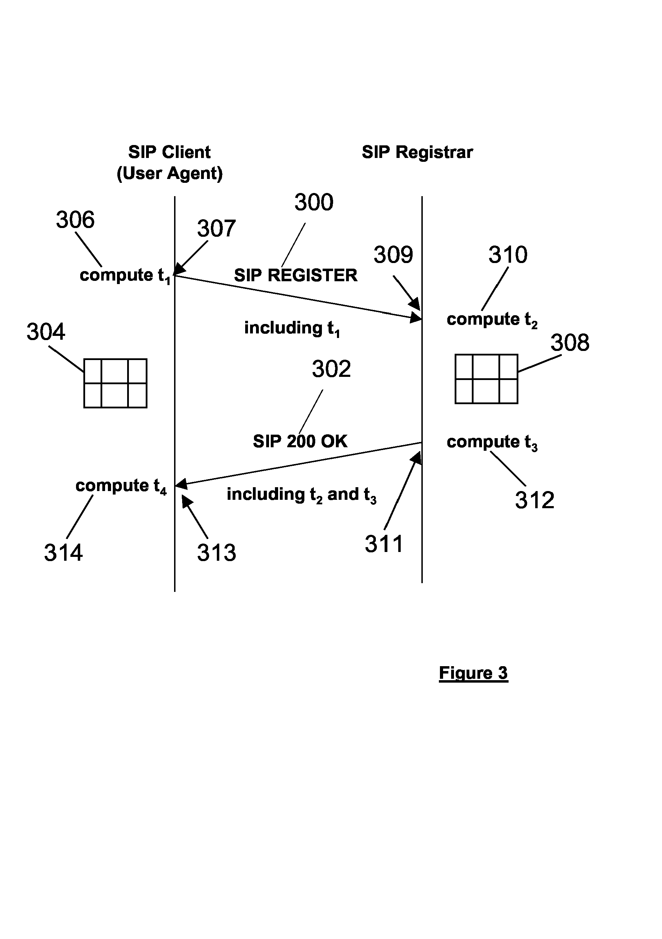

Referring to Figure 3, a registration process involves a simple transaction between the second user agent of the second host terminal 108 and the registrar server 112. The second user agent of the second host terminal 108 sends a SIP REGISTER request message 300 to the registrar server 112, which replies with a "200 OK" response message 302 once registration is complete.

For the telemetry task of measuring registration delay, the second host terminal 108 and registrar server 112 are appropriately instrumented with a SIP-AL Register module described above.

Consequently, a first SIP-AL Register module (not shown) detects generation of the SIP REGISTER request message 300, the SIP REGISTER request message 300, like other signalling messages, comprises a unique call-ID together with a source address and a destination address defining a SIP session. Detection of the generation of the SIP REGISTER request message 300 triggers the first SIP-AL Register module to generate a first SIP Registration data record 304 populated with information pertaining to the SIP REGISTER request message 300, including for example source and destination IP addresses of the SIP REGISTER request message 300, source and destination port numbers of the SIP REGISTER request message 300, and other substrings extracted from the SIP REGISTER signalling message 300. It should be noted that the data required for the SIP Registration data record is configurable.

Thereafter, a first timestamp, t₁, is computed (Step 306) representing the departure time of the SIP REGISTER request message 300 from the second user agent of the second host terminal 108, the SIP Registration data record 304 being added, together with the first timestamp, t₁, to a first active cache (not shown) of the second host terminal 108, the SIP Registration data record 304 being indexed by a call-ID of the SIP REGISTER request message 300.

A first IPv6 Destination Options Header (not shown) is then generated and inserted in between the payload and IPv6 header of the SIP REGISTER request message 300, the first Destinations Options Header being encoded as a first Type-Length-Value (TLV) object. The data borne in the Destinations Options Header of the SIP REGISTER request message 300 is identifiable by a suitably instrumented recipient thereof as relating to measurements of SIP Register transactions. The first timestamp, t₁, is included in the first Destinations Options Header. The SIP REGISTER request message 300 is then sent (Step 307) to the registrar server 112.

Upon receipt (Step 309) of the SIP REGISTER request message 300, the reception of the SIP-AL Register TLV object constituting the first Destination Options Header of the SIP REGISTER request message 300 triggers a second SIP-AL Register module (not shown) resident in the registrar server 112 to generate a second SIP Registration data record 308 equivalent to the first SIP Registration data record 304. Additionally, a second timestamp, t₂, reflecting the time of reception of the SIP REGISTER request message 300, is computed (Step 310), and the second SIP Registration data record 308, together with the first timestamp t₁, extracted from the first TLV object, and the second timestamp, t₂, are stored, indexed by call-ID of the SIP REGISTER request message 300, in a second active cache (not shown) of the registrar server 112.

When the registrar server 112 is able to respond to the SIP REGISTER request message 300, the second SIP-AL Register module detects generation by the registrar server 112 of the "SIP 200 OK" response message 302 and uses the call-ID of the "SIP 200 OK" response message 302 to locate the second SIP Registration data record 308 in the second active cache of the registrar server 112. The SIP-AL Register module then, from the second SIP Registration data record 308 extracted from the second active cache of the registrar server 112, extracts the first and second timestamps t₁, t₂ and builds a second IPv6 Destination Options Header equivalent to the first IPv6 Destination Options Header described above. The second SIP-AL Register module then appends the second IPv6 Destination Options Header, encoded as a second TLV object, between the payload and IPv6 header of the "SIP 200 OK" response message 302, the second TLV object, the data being borne by the second Destinations Options Header of the "SIP 200 OK" response message 302 again being identifiable as relating to measurements of SIP Register transactions, and the second TLV object containing the second timestamp, t₂, and a newly computed (Step 312) third timestamp, t₃, representing a departure time of the "SIP 200 OK" response message 302. Thereafter, the "SIP 200 OK" response message 302 is sent (Step 311).

Finally, upon receipt (Step 313) of the "SIP 200 OK" response message 302 by the second user agent, the second TLV object constituting the Destination Options Header of the "SIP 200 OK" response message 302 triggers the first SIP-AL Register module to use the Call-ID of the "SIP 200 OK" response message 302 to access an appropriate data record, namely the first SIP Registration data record 304, from the first active cache of the second host terminal 108, and append the appropriate record with a computed (Step 314) fourth timestamp, t₄, corresponding to an arrival time of the "SIP 200 OK" response message 302, and the second and third timestamps t₂, t₃ borne by the second Destinations Options Header of the "SIP 200 OK" response message 302.

The measurement data shared between the second host terminal 108 and the registrar server 112 can then subsequently be collected from, in this example, the second host terminal 108 by the OSS application mentioned above. The mode of collection can be any suitable technique known in the art, including interrogation of the second host terminal 108 by the OSS application or transmission of the measurement data, in dedicated packets, to the OSS application in accordance with a predetermined release criterion, for example expiry of a predetermined period of time. Once in possession of the measurement data, the OSS application calculates, in this example, one or more of the following metrics:
- Total time for registration transaction, t = t₄- t₁
- Time spent at registrar, tᵣ = t₃- t₂
- Total transit time tₜᵣ = t - tᵣ
- One Way Delay transit times t_{owdreq} = t₂- t₁, and towdres = t₄- t₃

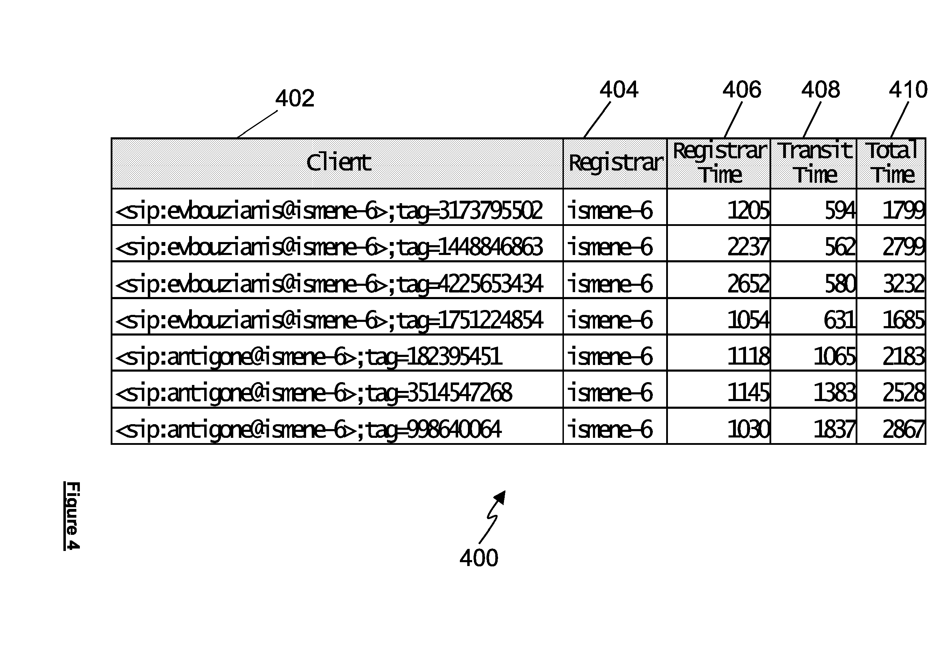

The results of the above calculations can be stored in a first table 400 (Figure 4) organised so as to comprise, for each host terminal, or client 402: the identity of the registrar server accessed 404, the time spent at the registrar server identified 406, the one-way delay transit time 408 calculated, and the total time 410 calculated. If the measurement data is collected from the registrar server 112, the OSS application is still able to calculate the time spent at the registrar server, tᵣ, 406 and the single request one-way-delay transit time, t_{owdreq}, 408.

To be a good service assurance tool, the OSS application abstracts over the simple concept of transactions to allow drill-down access to details pertaining to different levels of abstraction, for example dialogues and sessions. A dialogue is a group of related transactions, for example call set-up or client registration. While a session would represent a complete SIP call identified through the globally unique call ID, the session can be made up of multiple dialogues, but all dialogues will have the same call ID.

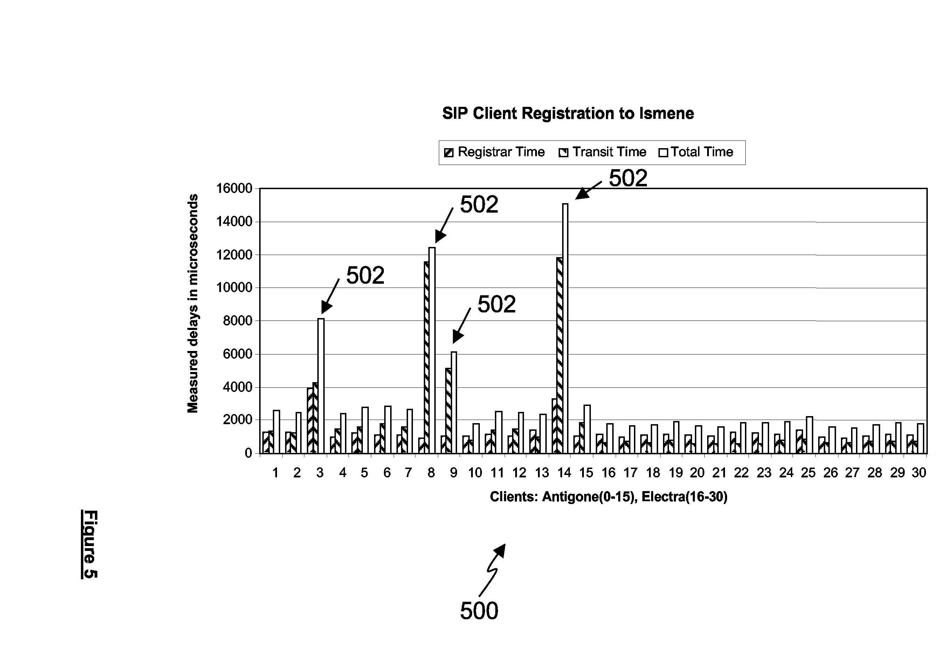

Hence, using the measurement data collected, the OSS application can evaluate the performance of the registrar server 112 and the experience of the second host terminal 108. The results of the calculations, i.e. the contents of the first table 400, can be represented, for example, as a bar chart 500 (Figure 5) showing peak delays 502 that can be easily identified by an engineer charged with maintaining reliable operation of a VolP service.

Also, the skilled person will appreciate that since the various measurements have been distributed to both measurement points, in this example the second host terminal 108 and the registrar server 112, most of the data needed to effect these calculations, and any subsidiary identifying information, are available at these measurement points, thereby obviating the need for correlation.

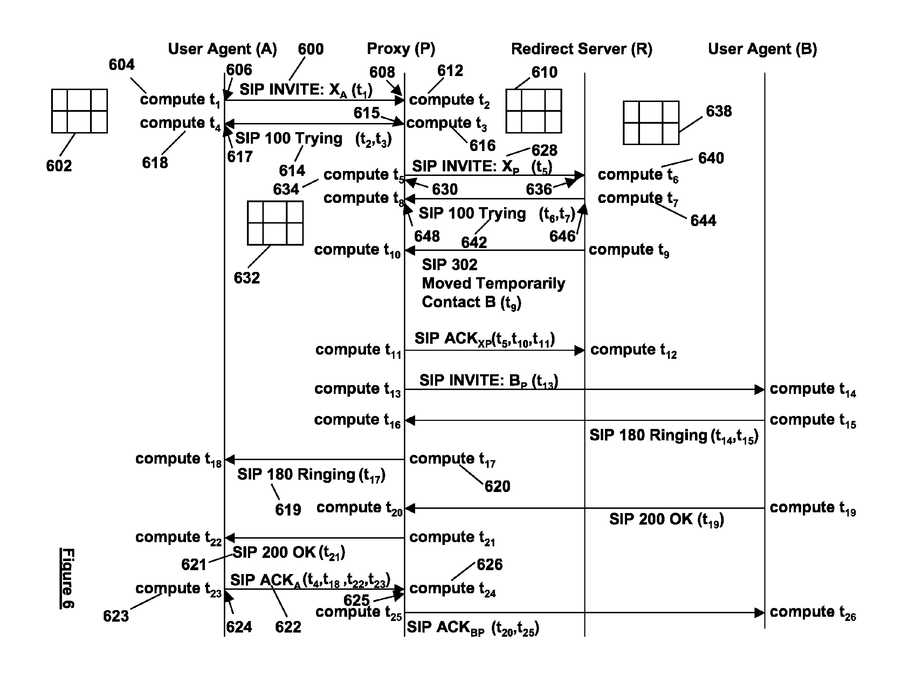

In another embodiment (Figure 6), the first host terminal 102 is instrumented with a first SIP-AL Invite module, described above, for detecting generation of a SIP INVITE X_{A} request message 600, the SIP INVITE X_{A} request message 600 having a unique Call-ID together with a source address and a destination address defining a SIP session. Upon detection of the SIP INVITE X_{A} request message 600, the first SIP-AL Invite module creates a first SIP Invite data record 602 and computes (Step 604) a first timestamp, t₁, corresponding to a departure time of the SIP INVITE X_{A} request message 600. The first SIP Invite data record 602 is then added, together with the first timestamp, t₁, to a first active cache of the first host terminal 102, indexed by a Call-ID of the SIP INVITE X_{A} request message 600.

A first IPv6 Destination Options Header is also generated and inserted between the payload and IPv6 header of the SIP INVITE X_{A} request message 600; the first IPv6 Destination Options Header being encoded as a TLV object comprising the first timestamp t₁. The TLV object constituting the first Destinations Options Header is identifiable as containing data relating to a measure of SIP Invite transactions. The SIP INVITE X_{A} request message 600 is then sent (Step 606) to the proxy server 104.

The SIP INVITE X_{A} request message 600 is received (Step 608) by the proxy server 104, the presence of the first Destination Options Header in the SIP INVITE X_{A} request message 600 triggering a second SIP-AL Invite module in the proxy server 104 to generate a second SIP Invite data record 610, equivalent to the first SIP Invite data record 602. A second timestamp, t₂, is also computed (Step 612) corresponding to the reception time of the SIP INVITE X_{A} request message 600 and, the second SIP Invite data record 610 is added, together with the first timestamp, t₁, extracted from the TLV object and the second timestamp, t₂, to a second active cache (not shown) of the proxy server 104, again indexed by the Call-ID of the SIP INVITE X_{A} request message 600.

If subsequent response signalling messages are generated and detected at the proxy server 104 having the same Call-ID as the Call-ID of the second SIP Invite data record 610 created as a result of receipt of the SIP INVITE X_{A} request message 600, i.e. in a forward direction, the second SIP-AL Invite module at the proxy server 104 accesses the second SIP Invite data record 610 and extracts the second timestamp, t₂, not yet distributed to its downstream immediate neighbour, i.e. the first user agent of the first host terminal 102. In the present example, the subsequent response signalling message is a "SIP 100 Trying" response message 614 to be sent to the first user agent of the first host terminal 102. The second SIP-AL Invite module then builds a second IPv6 Destination Options Header, which is inserted between the payload and IPv6 header of the "SIP 100 Trying" response message 614. The second Destination Options Header of the "SIP 100 Trying" response message 614 is encoded as a second TLV object and is identifiable by a suitably instrumented recipient thereof as bearing measurement data relating to the SIP Invite transaction. The second TLV object is provided with the second timestamps, t₂, and a third timestamp, t₃, which is computed (Step 616) and corresponds to a departure time of the "SIP 100 Trying" response message 614. The "SIP 100 Trying" response message 614 is then sent (Step 615) to the first user agent of the first host terminal 102.

Upon receipt (Step 617) of the "SIP 100 Trying" response message 614, the first SIP-AL Invite module at the first host terminal 102 extracts the second and third timestamps t₂, t₃ from the second Destinations Options Header of the "SIP 100 Trying" response message 614. A fourth timestamp, t₄, is also calculated (Step 618), the fourth timestamp, t₄, corresponding to a time of receipt of the "SIP 100 Trying" response message 614. The first SIP-AL Invite module then accesses the first SIP Invite data record 602 and appends the second, third and fourth timestamps t₂, t₃, t₄ to the first SIP Invite data record 602.

If other subsequent response messages are generated by the proxy server 104, for example a "SIP 180 Ringing" signalling message 619, having the same call-ID as that stored in the second SIP Invite data record 610 created previously by the second SIP-AL Invite module, the second SIP-AL Invite module detects the generation of the subsequent response message and extracts timestamps not yet distributed to the first user agent of the first host terminal 102, i.e. the downstream immediate neighbour. Thus, as described above in relation to the "SIP 100 Trying" response message 614, the second timestamp, t₂, is retrieved. In the case of a "SIP 180 Ringing" signalling message 619, a previously computed (Step 620) seventeenth timestamp, t₁₇, is retrieved through access to the second SIP Invite data record 610 previously created and stored in the second active cache of the proxy server 104.

The second SIP-AL module then builds another IPv6 Destination Options Header and inserts it between the payload and IPv6 header of the subsequent response message. The another IPv6 Destination Options Header is encoded as another TLV object and is identifiable as containing measurement data relating to the SIP Invite transaction. The another TLV object also contains the hitherto undistributed timestamps, for example the second timestamp, t₂, in the case of the "SIP 100 Trying" response message 614 or the seventeenth timestamp, t₁₇, in the case of the "SIP 180 Ringing" signalling message 619. A newly computed timestamp, representing the departure time of the subsequent response message, is also included as part of the another TLV object. For example, in relation to the "SIP 100 Trying" response message 614, the third timestamp, t₃, as described above is included in the TLV object. In the case of the "SIP 180 Ringing" signalling message 619, the seventeenth timestamp, t₁₇, is the only undistributed timestamp and so is the only timestamp included in the another TLV object.

In the case of a "SIP 200 OK" response message 620, the generation of the "SIP 200 OK" response message 621 is detected by the second SIP-AL Invite module, resulting in the generation of a twenty-first timestamp, t₂₁, that is shared with the first user agent of the first host terminal 102 in the same way as already described above in relation to other subsequent response messages.

At the first user agent of the first host terminal 102, arrival of the subsequent response message is detected by the first SIP-AL Invite module of the first host terminal 102, resulting in the first SIP-AL Invite module of the first host terminal 102 computing an arrival time timestamp for the subsequent response message. The Call-ID of the received subsequent response message is then used by the first SIP-AL Invite module of the first host terminal 102 to access an appropriate SIP Invite data record stored in the first active cache of the first host terminal 102. The arrival time timestamp is then added to the appropriate SIP Invite data record along with any timestamp data carried in the another Destinations Options Header of the received subsequent response message. Therefore, in relation to receipt of the "SIP 200 OK" response message 621, the first SIP Invite record 602 stored in the first active cache of the first host terminal 102 comprises the first, second, third and fourth timestamps t₁, t₂, t₃, t₄, the seventeenth timestamp t₁₇, an eighteenth timestamp t₁₈, the twenty-first timestamp t₂₁, and a twenty-second timestamp t₂₂ corresponding to a time of receipt of the "SIP 200 OK" response message 621 by the first user agent of the first user terminal 102.

In reply to the "SIP 200 OK" response message 621, the first user agent of the first host terminal 102 generates a SIP ACK_{A} request message 622 that is detected by the fist SIP-AL Invite module of the first host terminal 102. In response to detection of the SIP ACK_{A} request message 622, the first SIP-AL Invite module access the first SIP Invite data record 602 stored in the first active cache of the first host terminal 102 using the Call-ID of the SIP ACK_{A} request message 622. The first SIP-AL Invite module calculates (Step 623) a twenty-third timestamp, t₂₃, corresponding to the departure time of the SIP ACK_{A} request message 622, the first SIP Invite data record 602 stored in the first active cache of the first host node 102 being populated with the twenty-third timestamp, t₂₃. A further IPv6 Destination Options Header is then produced and inserted in between the payload and IPv6 header of the SIP ACK_{A} request message 622, the further Destinations Options Header being encoded as a further TLV object identifiably a suitably instrumented recipient thereof as carrying measurement data relating to the SIP-AL Invite transaction, the further TLV object also including any undistributed timestamps, for example, the fourth timestamp, t₄, the eighteenth timestamp, t₁₈, the twenty-second timestamp, t₂₂, and the twenty-third timestamp, t₂₃. The SIP ACK_{A} request message 622 is then sent (Step 624) to the proxy server 104.

Upon receipt (Step 625) of the SIP ACK_{A} request message 622 at the proxy server 104, the second SIP-AL Invite module of the proxy server 104 detects the further Destination Options Header and accesses, using the Call-ID of the SIP ACK_{A} request message 622, the second SIP Invite data record 610 stored in the second active cache of the proxy server 104, and the timestamps carried in the further Destinations Options Header of the SIP ACK_{A} request message 622 are extracted therefrom. A twenty-fourth timestamp, t₂₄, corresponding to a time of arrival of the SIP ACK_{A} request message 622 is computed (Step 626) and, once accessed, the second SIP Invite data record 610 is updated to include the twenty-fourth timestamp, t₂₄, along with the fourth, eighteenth, twenty-second and twenty-third timestamps t₄, t₁₈, t₂₂, t₂₃ extracted from the further Destinations Options header of the SIP ACK_{A} request message 612.

Using the measurement data shared between the first user agent of the first host terminal 102 and the proxy server 104 by distribution thereof in the manner described above, a number of useful calculations can be carried out to measure performance of the individual components involved in supporting a given SIP session as well as aggregate performance of a number of the components involved in supporting the given SIP session, in an analogous manner to that described above in relation to the previous embodiment, for example a call set-up time.

Of course, as part of the call set-up dialogue, other messages are exchanged between the proxy server 104 and other components that support SIP sessions, for example the redirect server 106 and the second host node 108. Consequently, and as a non-exhaustive example, after sending the "SIP 100 Trying" response message 614, the proxy sever 104 generates a SIP INVITE X_{P} request message 628 to be sent (Step 630) to the redirect server 106, the generation of the SIP INVITE Xₚ request message 628 being detected by the second SIP-AL Invite module of the proxy server 104. Upon detection of the SIP INVITE X_{P} request message 628, the second SIP-AL Invite module creates a third SIP Invite data record 632 and computes (Step 634) a fifth timestamp, t₅, corresponding to a departure time of the SIP INVITE X_{P} request message 628. The third SIP Invite data record 632 is then added, together with the fifth timestamp, t₅, to the second active cache, indexed by the call-ID of the SIP INVITE X_{P} request message 628. Also, a third IPv6 Destination Options Header is produced and inserted between the payload and IPv6 header of the SIP INVITE X_{P} request message 628; the third IPv6 Destination Options Header is encoded as a TLV object identifiable as bearing measurement data relating to the SIP Invite transaction. The fifth timestamp t₅, is also included in the third TLV object.

Upon receipt (Step 636) of the SIP INVITE Xₚ request message 628 by the redirect server 106, a third SIP-AL Invite module resident at the redirect server 106 detects the third Destination Options Header and creates, using the Call-ID of the SIP INVITE Xₚ request message 628 as an index, a fourth SIP Invite data record 638 in a third active cache of the redirect server 106. The fifth timestamp, t₅, carried in the third Destinations Options Header of the SIP INVITE Xₚ request message 628 is also extracted from the third Destinations Options Header and added to the fourth SIP Invite data record 638. A sixth timestamp, t₆, corresponding to a time of arrival of the SIP ACKp request message 628 is computed (Step 640) and, once accessed, the fourth SIP Invite data record 638 is updated to include the sixth timestamp, t₆, along with the fifth timestamp t₅, extracted from the third Destinations Options Header of the SIP ACK_{A} request message 628.

In response to the receipt of the SIP INVITE X_{P} request message 628, the redirect server 106 generates a second "SIP 100 Trying" response message 642. The third SIP-AL Invite module of the redirect server 106 detects generation of the second "SIP 100 Trying" response message 642 and using the Call-ID of the "SIP 100 Trying" response message 642, the third SIP-AL Invite module accesses the fourth SIP Invite data record 638 and extracts the sixth timestamp, t₆, not yet distributed to the proxy server 104. The third SIP-AL Invite module then builds a fourth IPv6 Destination Options Header, which is inserted between the payload and IPv6 header of the second "SIP 100 Trying" response message 642. The fourth Destination Options Header is encoded as a fourth TLV object and identifiable as carrying measurement data relating to the "SIP 100 Trying" transaction. The sixth timestamps, t₆, and a seventh timestamp, t₇, that is computed (Step 644) corresponding to a departure time of the second "SIP 100 Trying" response message 642, are also included in the fourth TLV object created. The second "SIP 100 Trying" response message 642 is then sent (Step 646) to the proxy server 104.

Upon receipt (Step 648) of the second "SIP 100 Trying" response message 642, the second SIP-AL Invite module at the proxy server 104 extracts the sixth and seventh timestamps t₆, t₇ from the fourth Destinations Options Header of the second "SIP 100 Trying" response message 642 and accesses the third SIP Invite data record 610 and appends the sixth and seventh timestamps t₆, t₇ to the third SIP Invite data record 610.

As previously mentioned, the above exchange of signalling messages with the corresponding distribution of timestamps between the proxy server 104 and the redirect server 106 is purely exemplary and the dialogue required to set-up a VoIP call between the first and second host terminals 102, 108 comprises other exchanges of signalling messages, for example between the one or more proxy server 104 and the second user agent of the second host terminal 108, as can be seen in Figure 6.

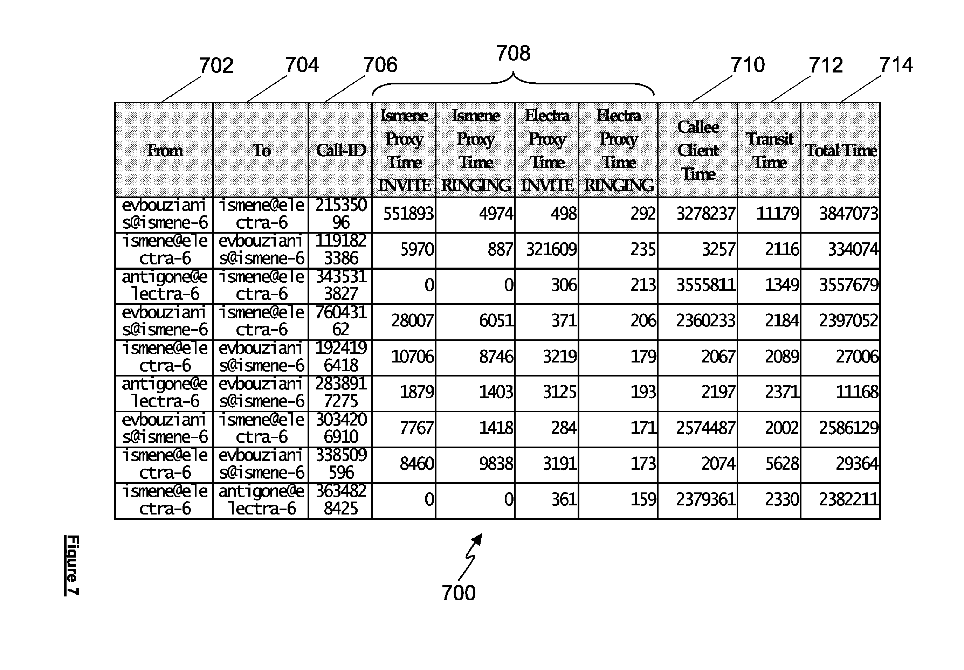

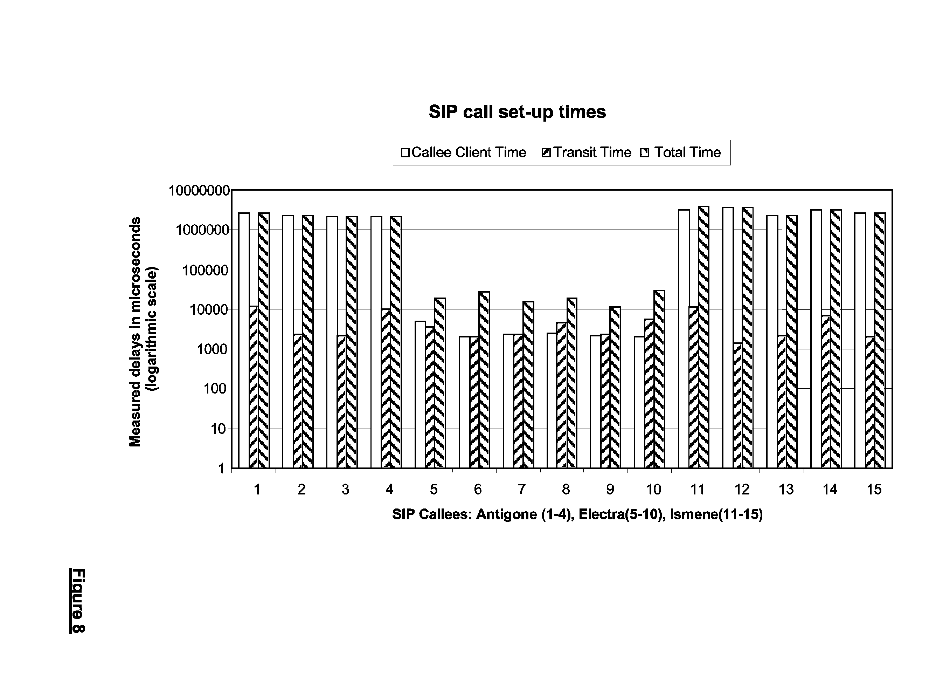

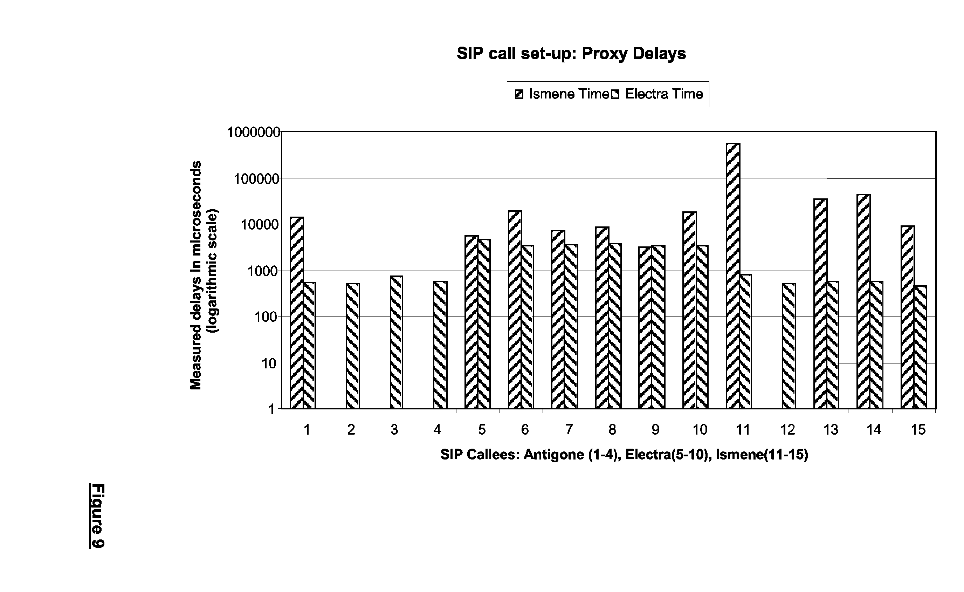

Measurement data collected and distributed between the various SIP supporting components of the communications network 100 can be used, again, to carry out calculations to measure performance of individual components or aggregate performance of a number of the components supporting a given SIP session, in the analogous manner to that already described above. One example of the aggregate performance is the time taken from sending the SIP INVITE X_{A} signalling message 600 from the first host terminal 102 to receiving the "SIP 180 Ringing" response message at the first host terminal 102. To achieve such calculations, the measurement data is collected, in this example, by the OSS application described above and the measurement data used to perform calculations indicative of performance of one or more component. The results of the calculations performed by the OSS application are stored, in this example, in a second table 700 (Figure 7) that is organised into columns of: source (URL type) address 702, destination (URL type) address 704, Call-ID 706, times 708 to send predetermined signalling messages to respective proxy servers, callee client time 710 (the time spent processing the signalling message's request/response at a callee terminal), transit time 712 and total time 714. The data stored in the second table 700 can then be represented graphically (Figures 8 and 9) to provide an engineer with a visual representation of call set-up times (Figure 8) or proxy delays (the time spent processing signalling messages at a particular proxy server) in relation to call set-ups (Figure 9).

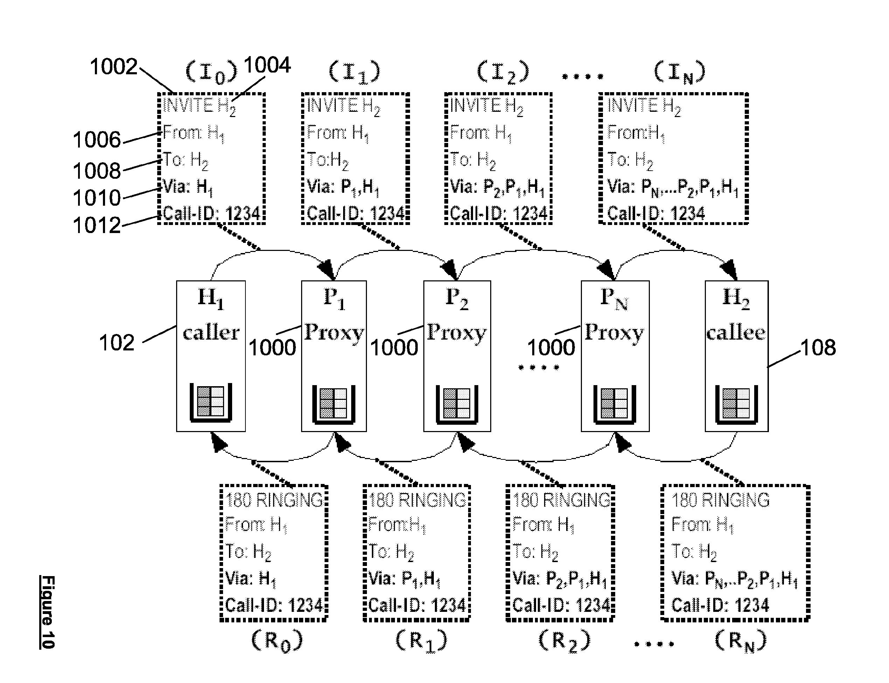

In a further embodiment (Figure 10), and indeed as can be seen from Figure 6, a SIP transaction can involve one or more signalling messages traversing a number of servers, for example proxy servers. Therefore, in this example, a SIP Invite message follows a path from the first user terminal 102 that traverses a series of N proxy servers 1000, albeit modified en-route, before reaching the second host terminal 108. The path followed by a SIP Invite signalling message 1002 that constitutes the SIP Invite transaction can be traced by reference to a Via object header recorded in the Invite signalling message. In this respect, the "Via" object header is a mandatory field added by, in this example, the first user agent of the first host terminal 102 to identify a host from which a request originates. The Via object is augmented by each SIP proxy server 1000 along the path followed by the request message. In this example, the SIP Invite signalling message 1002 is the request message. Consequently, as the SIP Invite signalling message 1002 progresses from proxy server to proxy server in the series of N proxy servers 1000, the SIP Invite signalling message 1002 is modified through the augmentation of the Via object by each of the series of N proxy servers 1000. Each entry in the "Via" object header identifies a SIP version, branch identifier, protocol used, source address and port number of the host from which the signalling request message, and in this example the SIP Invite signalling message 1002, was sent.

In addition to storing timestamps indexed by Call-ID, the second SIP-AL Invite module of each of the series of N proxy servers 1000 stores a copy of the Via object contained in the SIP Invite signalling message 1002 received before forwarding, after augmentation of the Via object, to the next proxy server of the series of N proxy servers 1000. Thus, a "footprint" is left behind at each node of the series of N proxy servers 1000 visited that can be utilised at a later point in time to trace a particular call set-up dialogue. Similarly, the footprint can be used to trace a transaction or a set of transactions.

In operation, a SIP signalling transaction is traced as follows. Firstly, SIP Invite data records are obtained by an OSS application from each of the series of N proxy servers 1000 and stored locally to the OSS application in a data store. As can be seen from Figure 10, each SIP Invite data record I₀, I₁, I₂, ..., IN comprises details of the type of transaction 1004, source information 1006, destination information 1008, a Via object 1010, an a Call-ID 1012. The OSS application searches through the SIP Invitation data records in the data store files in order to identify those of the SIP Invite data records that match a predetermined SIP session that is the subject of a trace. In this respect, the SIP session is defined by the Call-ID, the source information and the destination information. Of course, if after searching the SIP Invite data records for records having predetermined source and destination information only one Call-ID exists amongst the search results, then the Call-ID is immaterial to the definition of the SIP session. In this example, the source information H₁, the destination information H₂ (between the specified calling parties H₁ and H₂), and the Call-ID: 1234 serve to define the SIP session.

Consequently, a "shortlist" of SIP Invite data records relating to the SIP session to be traced is obtained as a result of the above search. From the shortlist of SIP Invite data records, the OSS application chooses a SIP Invite data record having a destination IPv6 address and port number equal to those of the second host terminal 108 (the callee), i.e. an intended destination of the signalling message being traced, thereby obtaining a final SIP Invite data record corresponding to a last SIP Invite message, IN, in a chain of forwarded SIP invitation messages. The OSS application then parses the header of the "Via:" object contained in the final SIP Invite data record, which, as described above, contains an entry for each hop along the path the SIP Invite message 1002 followed from caller to callee: "Via: P_{N} ,..., P₂, P₁, H₁", i.e. from the first host terminal 102 to the second host terminal 108 via the proxy servers P.

The OSS application then extracts the identities of all the hosts traversed by the SIP Invite signalling message 102 that are listed in the Via object of the final SIP Invite data record, and stores the identities as a list of intermediary hosts, i.e. the series of N proxy servers 1000, the SIP Invite signalling message went through. For each host listed in the list of intermediary hosts, the OSS application finds and keeps in an ordered list, i.e. a list to record direction and steps from a caller to a callee (including visited proxy servers therebetween) or a callee to a caller, the associated SIP Invite data record currently stored in the local data store for the OSS application, using the unique Call-ID to differentiate between other invitations between the same calling parties. The above steps are repeated until the last host in the "Via:" header, i.e. the originating caller host, in this example the first host terminal 102, is reached.

The list of extracted SIP Invite data records constructed in the above way is a complete traversal of the SIP Invite signalling message from the first host terminal 102 to the second host terminal 108, including all hops between intermediary SIP proxy servers, i.e. the series of N proxy servers 1000. Hence, the timestamps contained in the SIP Invite data records can be used one after the other to annotate the path with the exact time it took for the SIP Invite signalling message 1002 to move between each host on the path, and the delay incurred at every hop before the SIP Invite signalling message 1002 was forwarded any further.

Maintaining the list of intermediary hosts detected in the previous step and traversing the proxy servers listed backwards, the above algorithm can then identify matching reply messages from the second host terminal 108 back to the first host terminal 102, for example, a "SIP 180 RINGING" response message indicating a successful connection to the second user agent of the second host terminal 108 and that the caller should wait until the callee answers the invitation. The response messages again carry the same Call-ID as the associated SIP Invite signalling message, because they belong to the same SIP dialogue. A corresponding ordered list of timestamps collected in relation to response messages traversing the series of N proxy servers 1000 (the response messages need to follow the same path taken by the Invite signalling messages) can be constructed and used to annotate the response path with detailed time-measurements.

Adding the results together, i.e. the constituent parts along the path, yields a complete call set set-up time for the session being measured.

Although the above example has been described in the context of a request message, it should be appreciated that other messages can also comprise Via objects compatible with the above example, for example a response message, such as a "SIP 180 RINGING" message.

Whilst the above examples describe particular ways of storing data, it should be appreciated that the manner of storage, for example the organisation of the data, can be varied. In this respect, the data can be organised as tables of data associated with a given parameter, such as message type.

Although the above examples have been described in the context of packet communication, it should be appreciated that the term "message" is intended to be construed as encompassing packets, datagrams, frames, cells, and protocol data units and so these terms should be understood to be interchangeable.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A method of monitoring progress of a signalling message over a message sequence path for a SIP signalling transaction, the method comprising the steps of:
providing a data store comprising path trail data (1010) accessible by reference to message type, session and destination information (1008) related thereto;
obtaining data from the path trail data (1010), the data relating to a version of the signalling message as received at a called host node (108) and identifying a path followed by the signalling message;
obtaining measurement data associated with the signalling message from a first intermediary node (1000) identified by the data identifying the path followed by the signalling message.

2. A method as claimed in Claim 1, further comprising the step of:
obtaining measurement data associated with the message from a second intermediary node (1000) identified by the data identifying the path followed by the signalling message.

3. A method as claimed in Claim 1 or Claim 2, wherein the session is identified by data identifying a calling host node (102), data identifying the called host node (108), and data identifying a group of signalling messages comprising the signalling message.

4. A method as claimed in any one of Claims 1 to 3, wherein the called host node (108) constitutes a destination for the version of the signalling message as received by the called host node (108), the step of obtaining the data identifying the path followed by the signalling message further comprising:
using data identifying the destination for the version of the signalling message as received by the called host node (108) to identify partially the path followed by the signalling message.

5. A method as claimed in any one of Claims 1 to 4, wherein the signalling message has a session associated therewith, the step of obtaining the data identifying the path followed by the signalling message further comprising:
using data identifying the session associated with the signalling message to identify partially the path followed by the signalling message.

6. A method of tracing back a signalling message comprising the method of monitoring progress of a signalling message over a message sequence path for a SIP signalling transaction as claimed in any one of Claims 1 to 5.

7. A computer program code element comprising computer program code means to make a computer execute the method as claimed in any one of the preceding claims.

8. A computer program code element as claimed in Claim 7, embodied on a computer readable medium.

9. A network monitoring apparatus, the apparatus comprising:
a data store for storing path trail data (1010) accessible by reference to message type, session and destination information (1008) related thereto;
a processing resource arranged to obtain, when in use, data from the path trail data (1010), the data relating to a version of the signalling message as received at a called host node (108) and identifying a path followed by the signalling message; wherein
the processing resource is further arranged to obtain, when in use, measurement data associated with the signalling message from a first intermediary node (1000) identified by the data identifying the path followed by the signalling message.
